(19) Europäisches Patentamt
European Patent Office
Office européen des brevets

(11) EP 4 692 853 A1

(12) **EUROPEAN PATENT APPLICATION**

(43) Date of publication:
**11.02.2026 Bulletin 2026/07**

(21) Application number: **25187227.1**

(22) Date of filing: **03.07.2025**

(51) International Patent Classification (IPC):
**G01S 17/86** (2020.01)    **G01S 17/933** (2020.01)
**G08G 5/51** (2025.01)    **G08G 5/80** (2025.01)

(52) Cooperative Patent Classification (CPC):
**G01S 17/933; G01S 17/86; G08G 5/21; G08G 5/51; G08G 5/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 US 202418797187**

(71) Applicant: **The Boeing Company**
**Arlington, VA 22202 (US)**

(72) Inventor: **SCHWIESOW, Michael Brandon**
**Arlington, 22202 (US)**

(74) Representative: **Boult Wade Tennant LLP**
**Salisbury Square House**
**8 Salisbury Square**
**London EC4Y 8AP (GB)**

(54) **OBJECT CLASSIFICATION SYSTEM FROM UNSTRUCTURED POINT CLOUDS**

(57) An object classification system may be present on a vehicle with a computing device connected to a sensor mounted on the vehicle. In response to an object positioned in a field of view of the sensor, the computing device may determine a state of the object after calculating a relative shape stability value for the object over time. The computing device may then deviate from a predetermined route for the vehicle in response to a classification of the object as a dynamic state.

FIG. 1

## Description

### TECHNICAL FIELD

The present disclosure is directed to an object classification with an unstructured point cloud and, more particularly, to autonomous activity for a vehicle.

### BACKGROUND

As sensors and sensor networks become more ubiquitous, various activities have the opportunity to be supplemented by computer intelligence. While providing sensed information to a human in intelligent manners has been employed in the past, modern sensor systems have attempted to employ computer intelligence to automate aspects of various tasks. Such automation may provide increased safety, efficiency, or both in many activities when the computer intelligence operates correctly.

However, the proper operation of a sensor, or collection of sensors, may be inconsistent and/or inaccurate for a variety of environmental and/or functional situations. For instance, moisture may cause one or more sensors to read incorrectly and produce information that may cause a human operator to conduct inefficient reactions. Accordingly, there is a continued need for improved object identification for autonomous, and semi-autonomous, systems for vehicles, such as aircraft, automobiles, and robots.

### SUMMARY

There is described herein an object classification system present on a vehicle with a computing device connected to a sensor mounted on the vehicle. In response to an object positioned in a field of view of the sensor, the computing device determines a state of the object after calculating a relative shape stability value for the object over time. The computing device then deviates from a predetermined route for the vehicle in response to a classification of the object as a dynamic state.

Other examples of an object classification system detect an object with a sensor before calculating a relative shape stability value for the object over time. A computing device then determines a state of the object in response to the relative shape stability value and calculates the relative shape stability value. In response to a classification of the object as a dynamic state by the computing device, a deviation from a predetermined route for the vehicle is prescribed.

An object classification system, in some examples, detects a first object and a second object with a sensor prior to calculating a relative shape stability value for each of the first object and second object over time with a computing device. A first state of the first object is determined by the computing device in response to the calculated relative shape stability value and a second state of the second object is determined by the computing device in response to the calculated relative shape stability value. Each of the first object and second object are classified by the computing device as a dynamic state before the computing device deviates from a predetermined route for the vehicle in response to a tracked dynamic state of first object.

### BRIEF DESCRIPTION OF THE DRAWINGS

Further advantages and features of the present disclosure will become apparent from the following description and the accompanying drawings, to which reference is made.

FIG. 1 illustrates portions of a taxiing environment in which assorted examples can be practiced.
FIG. 2 illustrates features of the taxiing environment of FIG. 1 operated in accordance with various examples of this disclosure.
FIG. 3 illustrates a flowchart of a process that may be carried out in the taxiing environment of FIG. 1 in accordance with assorted examples of this disclosure.
FIG. 4 illustrates a flowchart of a process that may be carried out in the taxiing environment of FIG. 1 in accordance with some examples of this disclosure.
FIG. 5 illustrates a flowchart of a process that may be carried out in the taxiing environment of FIG. 1 in accordance with various examples of this disclosure.
FIG. 6 illustrates portions of a taxiing environment employing assorted examples of this disclosure.
FIG. 7 illustrates a block representation of features of an object classification system that may be utilized in a taxiing environment in some examples.
FIG. 8 illustrates features of an object classification system operated in accordance with various examples of this disclosure.

FIG. 9 illustrates portions of an aircraft employing an object classification system in accordance with examples of this disclosure.

## DETAILED DESCRIPTION

Examples of the disclosure are generally directed to a system that accurately and efficiently detecting and classifying objects in a field of view. The ability to properly classify objects as static or dynamic obstacles allows the object classification system to support piloted, autonomous, or semi-autonomous, operation of equipment, such as aircraft or other vehicles.

Reference will now be made in detail to presently preferred examples and methods of the present disclosure, which constitute the best modes of practicing the present disclosure presently known to the inventors. However, it is to be understood that the disclosed examples are merely exemplary of the present disclosure that may be embodied in various and alternative forms. Therefore, specific details disclosed herein are not to be interpreted as limiting, but merely as a representative basis for any example of the present disclosure and/or as a representative basis for teaching one skilled in the art to variously employ the present disclosure.

It is also to be understood that this present disclosure is not limited to the specific examples and methods described below, as specific components and/or conditions may, of course, vary. Furthermore, the terminology used herein is used only for the purpose of describing particular examples of the present disclosure and is not intended to be limiting in any way.

As sensor and computing technology advance to provide faster data collection, automation of manual activities has become more attainable. The addition of machine learning and/or artificial intelligence has further allowed sensor information to be utilized to automate more complex activities. However, the quality of sensor information may, at times, present challenges to the accurate automation of an activity. For instance, automation of aircraft, and other vehicle, movement on the ground, which may be characterized as taxiing, can be jeopardized in the event that sensor information provides inaccurate information or malfunctions. Hence, various examples of the present disclosure are directed to an object classification system that accurately interprets sensor information to allow for the automation, or partial automation, of complex activities.

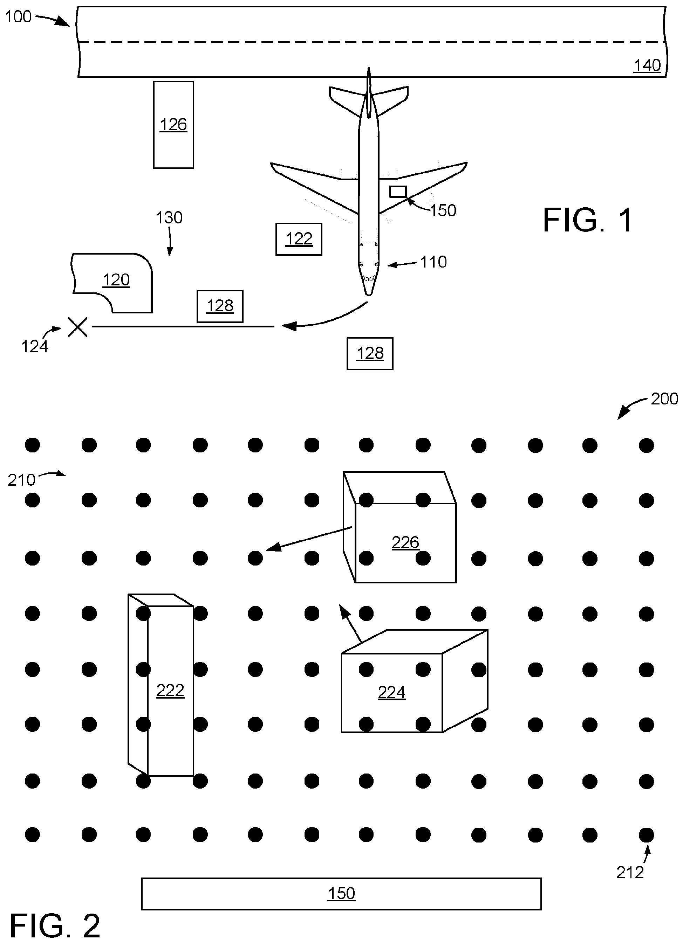

Turning to the drawings, FIG. 1 illustrates portions of a sensing environment 100 in which assorted examples of the present disclosure may be practiced. The top view of the sensing environment 100 conveys how an aircraft 110, such as an airplane, glider, vertical takeoff and landing (VTOL) airplane, autonomous drone, semi-autonomous airplane, or other lifting body, may be positioned during a taxiing operation with a gate 120.

While not required or limiting, the gate 120 may be a portion of a site 130, such as an airport, hanger, or other facility, that functionally services aspects of the aircraft 110. It is noted that the gate 120 may be one or many similar, or dissimilar, gates 120 operating concurrently, or sequentially, to transfer cargo, such as humans, animals, or containers, between the site 130 and the aircraft 110. It is further noted that the gate 120 may be any structural configuration that accesses one or more ports of the aircraft 110, such as a door, hatch, or window.

The operation of the gate 120 to provide ingress to, or egress from, the aircraft 110 may be relatively straightforward and often is carried out safely and efficiently. However, moving and positioning the aircraft 110 relative to the gate 120 during a taxiing operation may be more complicated while presenting hazards and obstacles the jeopardize the safety of the aircraft 110 itself and the contents of the aircraft 110.

In an effort to align portions of the aircraft 110 with the gate 120, one or more static indicators 122 may be positioned along a route from a runway 140 to the gate 120. The term "runway" is used herein to include a defined area for the landing and takeoff of the aircraft 110, taxiways for general movement of assorted objects and aircraft 110, and general areas that facilitate blast pads and overruns. The surface of the runway 140 may be a natural material, such as dirt, water, or ice, as well as combinations of materials, such as concrete or asphalt. A runway 140, in some examples, includes a water surface, a strip for training the aircraft 110, which may be adjacent to another runway 140, a vertiport, or a heliport.

An aircraft 110 may include flying vehicles, such as, for example, but not limited to, commercial aircraft, private aircraft, military aircraft, watercraft, and helicopters among other types of flying, or hovering, vehicles. Runways 140, for example, may be any dimensions, such as 800 feet long by 26 feet wide or 40,000 feet long by 900 feet wide. A runway 140 may be virtual in some examples. Such a virtual runway 140 may, or may not, have visual markings. Other runways 140 may be non-precision instrument runways that include visual markings, such as centerlines for horizontal guidance, aiming points for vertical position guidance, and buoys. For precision instrument runways 140, blast pad, overrun areas, beginning space markers, ending space markers, centerlines, aiming points buoys, and other approach guidance fiducials may be included. There are, for example, single runways, parallel runways, intersecting runways, and open-V runway configurations, none of which are required or limiting to practice the assorted sensing examples of the present disclosure.

A static indicator 122 may be any diagram, symbol, or text located on a permanent, or temporary, surface. For instance, a parking region 124 of a paved ground surface may be occupied by lines and symbols associated with desired parking position of an aircraft 110 while text may be present on a selectable sign 126. Static indicators 122 may operate in concert with dynamic indicators 128, such as humans, motorized equipment, and flashing lights, to identify conditions, status, and instructions to an aircraft 110 during a taxiing operation between the gate 120 and the runway 140.

Despite the presence of static 122 and/or dynamic 128 indicators, taxiing operations may be time consuming and wrought with dangerous situations that occur quickly and change frequently. Interpretation of the assorted indicators 122/128 may be conducted by human operators, which employ the indicator information to execute a variety of different tasks and adjustments for taxiing operations. Human evaluation and activity may provide safe taxiing operations in some situations based on numerous different environmental and situational considerations. Yet, human operators may be susceptible to errors, lapse in judgement, and inabilities to ascertain some situations accurately.

Accordingly, one or more sensors 150 may be employed to aid human operators in accurately identifying indicators 122/128, obstacles, and environmental conditions during taxiing operations. Sensors 150 may further be utilized to automate aspects of a taxiing operation. It is noted that any number of sensors may be positioned anywhere to gather information about aircraft 110, gates 120, indicators 122/128, and other conditions. Regardless of the position of a sensor 150, gathered information may use one or more sensing technologies to locate, identify, and/or track objects, text, and symbols. For instance, a sensor 150 may employ light, radio, or ultrasonic frequencies to gather information about aspects of the sensor's field of view.

Through the use of at least one sensor 150, safety and efficiency of various aspects of a taxiing operation may be enhanced. Specifically, the identification and tracking of objects with sensors 150 may enhance automated, or manual, avoidance.

Within the scope of the assorted examples of a sensing system that may be utilized in the sensing environment 100 of FIG. 1, or another environment, is a vehicle not capable of flight. For instance, the sensing environment 100 in which examples of a sensing system is practiced may be a road, bridge, highway, tunnel, or off-road trail traversed by a piloted, or autonomous, vehicle, such as a car, truck, van, or robot, without the ability to generate lifting forces greater than the weight of the vehicle itself. Accordingly, throughout the present disclosure the term "taxiing" operations may be synonymous with ground activity of a vehicle that does, or does not, have the ability to generate lift and fly on sites 130 that do, or do not, have gates 120, runways 140, or parking regions 124.

FIG. 2 illustrates portions of the sensing environment 100 when features of an object classification system 200 are employed in accordance with various examples. To clarify, the perspective view of FIG. 2 conveys a field of view of a sensor 150 as well as some of the information gathered by the sensor 150 and returned to a computing device 202 for processing and evaluation, which may be employed to automate aspects of a taxiing operation and/or indicate taxiing conditions to one or more human operators.

As shown, the sensor 150 creates an unstructured point cloud 210 that consists of a number of frequency points 212 respectively representing where frequency beams are emitted. Although not required or limiting, the frequency points 212 may be beams of visible, or non-visible light, sent from an emitter portion of the sensor 150, such as a mechanical optics or solid-state phase array, and collected by a detector portion of the sensor 150. For detection configurations utilizing such light frequencies, the sensor 150 may be characterized as a light detection and ranging (LiDAR) sensor that operate to evaluate three dimensions.

While the operation of a LiDAR sensor 150 may provide object detection and tracking in some, theoretical situations, the practical operation of LiDAR sensing technology may present challenges. For instance, objects that have low reflectivity may present challenges to the efficient and reliable tracking and characterization of the object as static, such as object 222, or dynamic, such as objects 224 and 226. Various weather conditions, such as fog, snow, and rain, may result in consistent, or false identification of an object's state and, consequently, the accurate tracking of dynamic objects 224/226.

Even under ideal object detection conditions, a LiDAR sensor 150 may experience degraded reliability and/or performance. For instance, the presence of multiple objects 224/226 in a common space of the sensor's 150 field of view may cause detection, characterization, and tracking issues. That is, detecting whether one, or multiple, objects are present may cause the sensor 150 to temporarily, or permanently, mistake the state, direction of movement, and/or speed of movement of one or more objects. The non-limiting example shown in FIG. 2 illustrates how objects 224/226 moving at different directions and speed, as indicated by the orientation and length of solid arrows, may be mischaracterized as a single, stationary object by the sensor 150 in some situations.

Although not required or limiting, a computing device 202 may operate over time to identify and track various aspects in a field of view by segmenting a ground surface, identifying objects, defining one or more bounding boxes, defining object states as dynamic or static, tracking dynamic objects over time, and planning for expected path and velocity of dynamic objects. Such processes may be relatively straightforward in some situations, but are complicated by movement of the sensors, environmental conditions, and inconsistent readings from assorted sensors. Hence, examples are generally directed to enhanced manners of utilizing multiple sensors to efficiently and reliably detect and track assorted aspects over time.

With the operational challenges associated with object detection and state characterization due to inaccurate and/or inefficient operation of one or more sensors, the safety and confidence of automating aspects of aircraft 110 operation may be jeopardized. As a result, the generation of automation instructions, tasks, and actions, such as during taxiing activities, may be susceptible to operational challenges. Thus, various examples are directed to a system for object detection and tracking for a aircraft 110 that provides enhanced object characterization and tracking that optimizes the automation of activities.

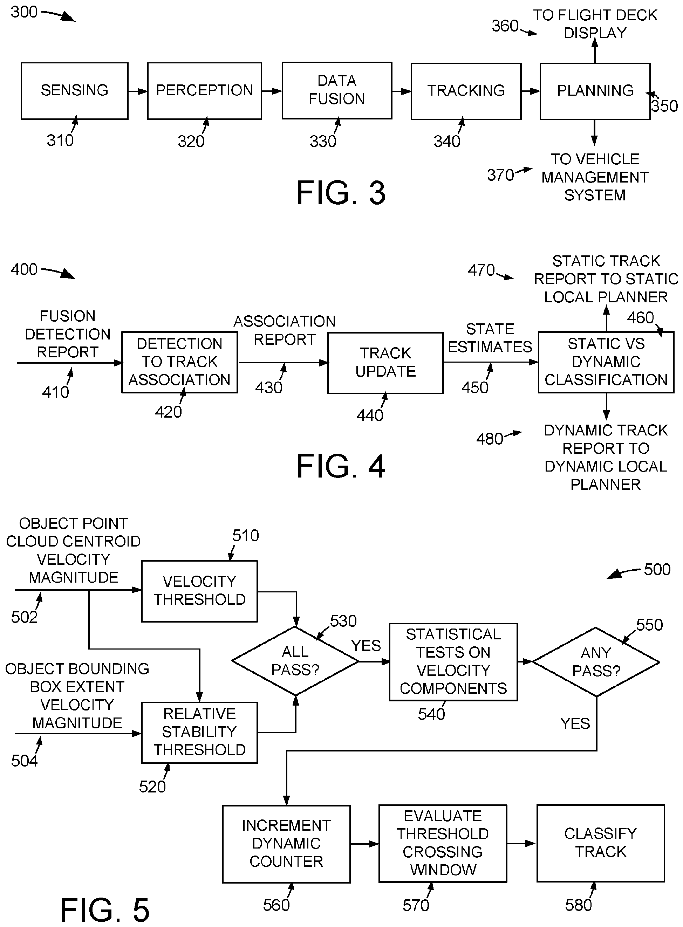

FIG. 3 displays a flowchart of a sensing process 300 that may be carried out with assorted features of a sensing system in the sensing environment 100 of FIG. 1. It is noted that the sensing process 300 may be executed by one or computing devices 202 that operate at least one sensor 150, such as a LiDAR, RADAR, acoustic, thermal, optical, or ultrasonic sensor, to collect information during movement of an aircraft 110 between a runway 140 and a designated parking region, such as a gate, hanger, or other stable location.

Initially, the sensing process 300 may activate one or more sensors 150 in step 310 to collect information about at least conditions and objects around an aircraft. A computing device next processes the gathered information from the connected sensors in step 320 to determine what is present within each sensor's field of view. That is, the computing device may separately characterize what different sensors detect in step 320 before combining the information from multiple sensors in step 330. The combination of information from different sensors in step 330 may provide efficient verification, redundancy, and error detection as the data from different sensors is compared by a computing device.

The combination of sensor data in step 330 may further allow for efficient state characterization of objects, which translates into efficient tracking of objects over time in step 340. The detection, characterization, and tracking of objects allows a computing device to generate and maintain one or more aircraft routes in step 340. In some examples, the route planning of step 350 may be supplemented by other information not generated by sensors, such as global policies, airport movement maps, and instructed aircraft movements.

The proactive planning of routes in step 350 allows for a variety of automated or manual responses, such as the individual, concurrent, or sequential transmission of planning data to a flight deck in step 360 and/or to a vehicle management system in step 370. For instance, proposed aircraft routes and information about conditions and objects may be passed directly to a manual operator that conducts taxiing operations. Information and proposed routes may, alternatively, be sent to a completely autonomous taxiing system that reacts to routes generated in step 340 with physical aircraft actions. Although the resulting information and routes from process 300 may be employed for purely manual or automated taxiing operations, other examples conduct taxiing operations with a combination of manual features and automated features. As such, the accurate operation of various redundant, or dissimilar, sensors may produce efficient and safe aircraft activities, particularly for taxiing operations.

In accordance with various examples, an aircraft, and/or aircraft landing site, may employ a more sophisticated version of the sensing process 300 of FIG. 3 in an effort to provide faster and more precise identification of objects, obstacles, and indicators to allow for greater route planning resolution and more seamless automated execution of prescribed aircraft actions. FIG. 4 depicts an example sensing routine 400 that may be conducted individually, or in combination with, the sensing process 300 of FIG. 3, to provide a greater understanding of the assorted aspects around an aircraft during a taxiing operation.

The sensing routine 400 may begin before, during, or after the data streams of multiple sensors are fused together through digital analysis and processing. With the results of sensor stream fusion, as illustrated by arrow 410, step 420 may detect assorted aspects of a field of view of the sensors utilized for the stream fusion. For instance, step 420 may employ computer processing to detect a ground, static objects, dynamic objects, indicators, and humans from the fused data streams of assorted sensors. As a result of the detection of step 420, an association of detected aspects may be generated, as represented by arrow 430.

Through the association of detected aspects from assorted sensors, step 440 can identify moving portions and update tracking information, which allows for the verification, or alteration, of the state of an object, identifier, or human, as represented by arrow 450. The updating of tracking information in step 440 may, in some examples, allow for efficient and reliable estimates of the state of one or more aspects. Such estimation of a static or dynamic state may allow for more precise classification of the path and/or speed of a dynamic aspect.

With the known, and estimated, state of various detected aspects of a field of view, sensor information may be parsed in step 460 into aspects that are expected to remain stationary (static) and aspects that are expected to move (dynamic) while taxiing operations are conducted. The parsing of sensed aspects into static and dynamic portions may result in the assignment of regions of a field of view to a static planner in step 470 or to a dynamic planner in step 480. The separation of portions of a field of view may allow a computing device to conduct concurrent, or otherwise efficient, processing of real-time sensor information along with existing taxiing instructions, policies, and routes.

In accordance with various examples, multiple sensors may be concurrently employed to understand the environment in which taxiing operations are occurring. The fusion of sensor data and intelligent characterization of static and dynamic aspects of a field of view allows for efficient and reliable automation of some, or all, of a taxiing operation. Yet, the accurate detection and tracking of objects, indicators, and humans may correlate to efficiency and reliability of automation instructions and tasks. The inconsistent operation and/or accuracy of separate sensors, along with inherent susceptibility of some sensors to unreliable readings, may render automation evaluations challenging.

Accordingly, various examples provide enhanced detection and tracking with multiple sensors, particularly during taxiing operations with an aircraft. FIG. 5 conveys a flowchart of an intelligent sensing routine 500 that may provide enhanced utilization of multiple sensors to optimize automation of aspects of a taxiing operation. It is noted that the steps and decisions of routine 500 are not exclusive and may, in some examples, be carried out concurrently, or sequentially, with the sensing process 300 of FIG. 3 and the sensing routine 400 of FIG. 4.

Arrow 502 represents sensed information relating to the centroid velocity magnitude of one or more objects in a field of view. The bounding box extent velocity magnitude is also inputted, as represented by arrow 504. The centroid velocity magnitude is evaluated by the controller of one or more controllers of a computing device in step 510 against a predetermined velocity threshold and in step 520 against a predetermined relative stability threshold, in accordance with equation (1):

$$F_{motion} = |V_{obj}| \geq V_{thresh} \qquad (1)$$

The parallel step of evaluating relative shape stability (RSS) is a subtlety which was uncovered through experimentation. As such, a relative shape stability threshold is utilized. The magnitude of the track velocity states must exceed a threshold to indicate object motion. With the combined information about the centroid velocity magnitude of an object and the bounding box extent velocity magnitude, step 520 may calculate the relative stability threshold according to equation (2):

$$F_{RSS} = |V_{obj}| - |V_{ext}| \geq RSS_{thresh} \qquad (2)$$

The computation and analysis of the thresholds associated with object velocity and an object's relative stability allows decision 530 to determine if an object is actually moving. Once preliminary thresholding is passed in decision 530, hypothesis testing is conducted on the individual velocity components where the null hypothesis is that the object is static. If the null hypothesis is rejected for any object or object component, then a dynamic counter ($N_{dyn}$) is incremented for the current evaluation window. In the event a threshold from steps 510 or 530 are not met, routine 500 may return to gathering information, as illustrated by arrows 502 and 504.

Before making a classification decision, a measure of current track reliability ($T_{reli}$) and dynamic consistency ($D_{con}$) are evaluated over the current evaluation window. To clarify, current track reliability may be defined as the number of missed detections in the current window since the last track update while dynamic consistency may be defined in equation (3):

$$D_{con} = N_{dyn} - T_{reli} \qquad (3)$$

The resulting dynamic consistency may then be employed to compute a dynamic motion verification metric ($F_{win}$) in equation (4):

$$F_{win} = D_{con} \geq D_{thresh} \qquad (4)$$

If $F_{win}$ evaluates to true, then the track is classified as dynamic. Otherwise, an objet is classified as static.

From decision 530, the sensing routine 500 conducts statistical tests on velocity components of an object in step 540 before evaluating the test results in decision 550. If an object verifies in decision 550 that the object is in motion, step 560 increments a dynamic counter and proceeds to step 570 where a window is computed, and/or evaluated, to determine when one or more thresholds will be crossed. The results of the threshold crossing window allows the routine 500 to classify the track of an object in step 580.

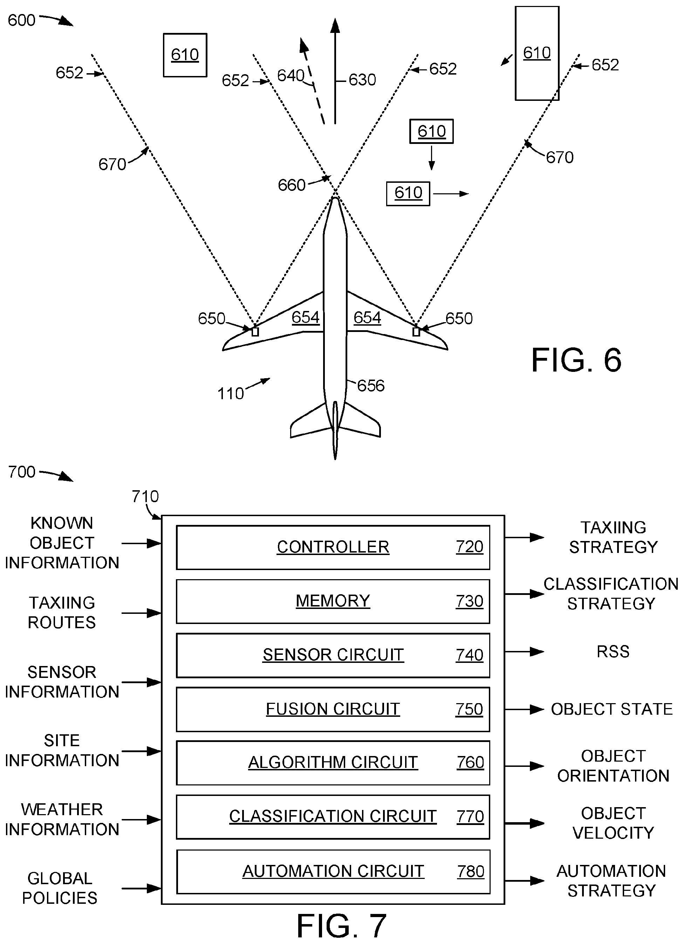

FIG. 6 illustrates a top view line representation of portions of a taxiing environment 600 in which assorted examples may provide enhanced object detection, classification, and tracking. The environment 600 may have any number, and type, of objects, indicators, and humans that are periodically, or consistently, static or moving over time. The non-limiting example shown in FIG. 6 has multiple dynamic objects 610, such as humans, equipment, or animals, moving in directions with velocities, as illustrated by solid arrows.

Along with the dynamic objects 610, the environment 600 has multiple static objects 620, such as signs, physical obstacles, and structures. The assorted objects 610/620 may move into, and out of, the field of view of an aircraft 110, particularly during taxiing operations between a runway and a designated parking region, such as a gate or hanger. The intended route 630 from runway to a designated parking region, or vice versa, may be influenced from a variety of informational sources, such as predetermined site policy, weather, and construction areas. The inclusion of manual supervision allows for efficient alteration of a set route 630 in response to dynamic 610 and/or static 620 objects. However, automating some, or all, of a taxiing operation to execute a route 630 that accounts for various objects 610/620 over time may present challenges.

It is noted that the automation of aspects of a taxiing operation may involve alerting a manual operator, such as a pilot or traffic controller, of potential hazards and route deviations, as illustrated by segmented arrow 640. Yet, the accurate operation of various system sensors, along with the efficient processing of sensor information into the position, direction of movement, and velocity of obstacles, indicators, hazards, and other dynamic objects, is needed to provide practical automation. That is, for automation information to effectively provide information to a human operator or to a controller for automated taxiing operations relies on both accurate operation of sensors and efficient processing of sensor information into objects and surfaces present in an aircraft's field of view.

In accordance with some examples, a sensing system may employ multiple separate sensors 650 positioned on the aircraft 110. The sensors 650 may have similar, or dissimilar fields of view, as illustrated by segmented lines 652, that may be statically or dynamically mounted to the wings 654 and/or fuselage 656 of the aircraft 110. It is noted that a sensing system may utilize a single sensor, such as a LiDAR, optical, thermal, or acoustic sensor, but such sensing configuration may provide a limited field of view that is more prone to inaccurate readings than sensing system examples that employ separate sensors 650 of the same type, such as LiDAR sensors.

The use of multiple, redundant sensors 650 may expand field of view, but may also present challenges for processing efficiency and accuracy. For instance, utilizing multiple separate LiDAR sensors 650, as illustrated in FIG. 6, may provide greater detection accuracy and efficiency in a middle portion 660 of the field of view and lesser detection accuracy and efficiency in edge portions 670 of the field of view. In other words, unstructured point clouds corresponding with multiple separate LiDAR sensors 650 may produce greater errors, such as false positives and incorrect object depth, while the redundant sensors 650 may provide enhanced detection in the middle portion 660.

With the difference in object detection accuracy in the respective field of view portions 660/670, despite having separate, redundant sensors 650, automation and automation instructions for taxiing operations may be degraded. That is, the presence of false positives, and other incorrect readings between sensors 650, may produce jerky, dangerous, and errant routing during automated taxiing activities. As a non-limiting example, a safe taxiing route 630 may be incorrectly altered due to a false positive reading of an object, which may jeopardize the safety of objects, indicators, and/or humans in the path of the altered route 640. It is noted that the unstructured point cloud employed by separate LiDAR sensors 650 may incorrectly account for object movement, state, direction, or velocity, which contributes to inconsistent, and potentially dangerous, automation instructions and activities for taxiing operations.

Accordingly, various examples are directed to a sensing system with optimized object classification via multiple, redundant LiDAR sensors 650 that detect via an unstructured point cloud. FIG. 7 illustrates a block representation of an object classification system 700 that may be employed in a taxiing environment 600 of FIG. 6 in various examples to provide improved detection accuracy and efficiency. The system 700 may be manifested in hardware and software in one or more computing devices 710 located on an aircraft 110, a taxiing site, or both.

A computing device 710 may employ one or more controllers 720, such as a microprocessor, system on chip, integrated circuit, or other programmable circuitry, that processes various input information, such as sensor information, existing site information, predetermined taxiing routes, weather information, and known object characteristics, to output various object detection, object classification, and automation instructions. It is contemplated that the computing device 710 may store various software, information, and data in one or more memories 730, such as permanent non-volatile solid-state memory cells, permanent magnetic sectors, or volatile solid-state cells.

Although the controller 720 may conduct any amount of processing to output assorted strategies, algorithm terms, and object characterizations, examples of the computing device 710 employ designated circuits that may operate alone, or in conjunction with the controller 720, to provide predetermined contributions to various strategies, object characterizations, and aircraft taxiing automation. For instance, the computing device 710 may have a sensor circuit 740 that verifies the operational state of the assorted connected sensors. A fusion circuit 750 may combine the information of separate sensors into a single field of view that combines separately detected objects while removing redundantly detected objects and surfaces.

The computing device 710 may further employ an algorithm circuit 760 that generates algorithm terms, such as relative shape stability (RSS) and subsequently executes the routines and processes shown in FIGS. 3-5. A classification circuit 770 may take sensor information along with other information, such as weather and site information, to classify one or more aspects of a detected object, such as state, movement direction, movement velocity, and object centroid location. The intelligent operation of the assorted circuits of the computing device 710 may generate a variety of information that may be utilized by an automation circuit 780 to proactively generate a taxiing strategy and react to changing taxiing conditions over time with automation instructions and/or automation tasks executed automatically or by manual aircraft operators.

While not required or limiting, a taxiing strategy may incorporate a variety of different policies, input data, and sensed information to prescribe one or more aircraft routes, speeds, and orientations that may be executed manually by human operators or automatically through the computer-directed execution of aircraft taxiing tasks. The proactive generation of a taxiing strategy that accounts for existing policies and site information may allow for efficient processing of sensor information and identification of situations where objects dictate changes in a prescribed aircraft taxiing route between a runway and a designated parking area.

Similarly efficient, the computing device 710 may proactively generate a classification strategy that prescribes sensing activity that provides efficient and accurate identification of an object's state (static/dynamic), orientation, movement direction, and movement velocity. Overall, the classification strategy may promote a reduction in detection errors, such as false positives and incorrect state characterizations. For example, the classification strategy may proactively assign sensing activity, such as resolution, frequency, centroid assignment, and sensor data fusion, that allows for efficient adaptation to encountered taxiing conditions, such as weather, air quality, and number of objects located on the periphery of the aircraft's field of view.

Through the utilization of the assorted features of the computing device 710, objects encountered by an aircraft may be accurately and efficiently detected and accurately classified, which enables safe and perceivably seamless automation of some, or all, of a taxiing operation for the aircraft that accommodate the assorted static surfaces and objects along with the dynamic objects.

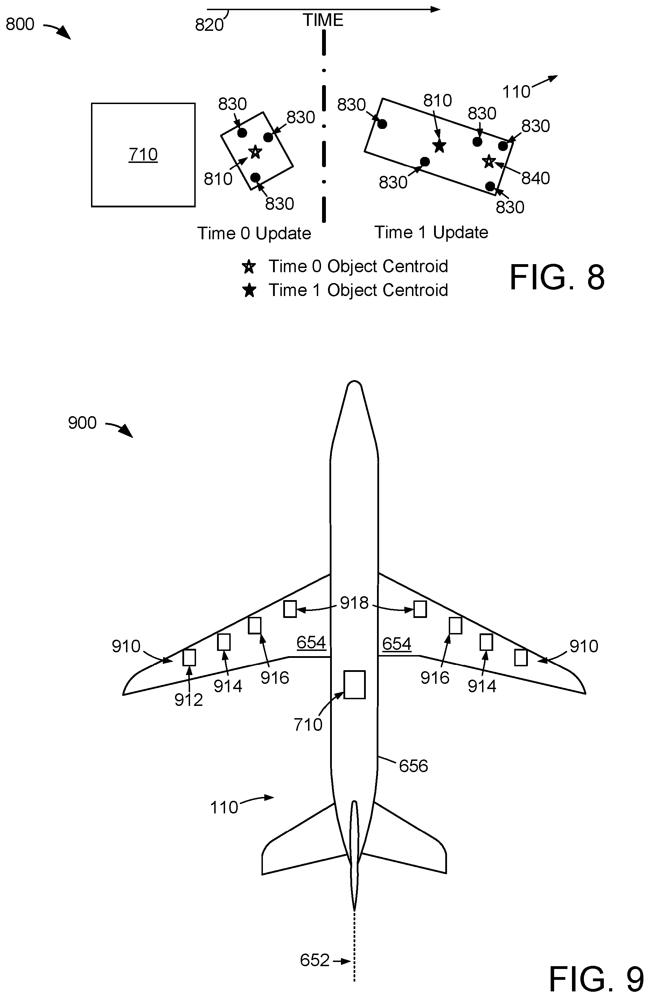

FIG. 8 conveys a block representation of portions of a taxiing environment 800 in which features of the object classification system 700 of FIG. 7 may be utilized to provide efficient and accurate characterization of one or more encountered objects. It is noted that aspects of the taxiing environment 800 shown in FIG. 8 may employ one or more of the algorithms, processes, and routines of FIGS. 3-6 to determine an object's centroid 810 and relative object stability over time.

The nature of widely spaced, inconsistent returns from static objects leads to the introduction of relatively large, simultaneous changes in the velocities of both object centroids and bounding box extents. However, objects which are truly in motion will exhibit relatively large velocity components, but stable shape characteristics with small extent velocities. Over time, as illustrated by solid arrow 820, an object classification system computing device 710 may assess a new location of an object centroid 840 compared to points 830 of an unstructured point cloud, which contributes to the accurate determination that an object is dynamic and the assessment of the dynamic object's movement direction and velocity.

FIG. 9 illustrates a top view line representation of portions of another taxiing environment 900 utilizing various features of an object classification system. The top view of the taxiing environment 900 conveys how a computing device 710 may be present within an aircraft 110 and connected to an array 910 of sensors respectively positioned on separate positions along the wings of the aircraft 110. It is noted that the positions of the sensors is not limited and various sensors may be located in a single position on the fuselage or wings.

In accordance with various examples, the sensor array 910 utilizes different types of sensors, such as LiDAR sensors 912, optical sensors 914, acoustic sensors 916, and thermal sensors 918, positioned at strategic locations to collectively provide a field of view, as illustrated by segmented lines. It is noted that the assorted sensors of the array 910 may have individual fields of view that are fused by the computing device 710 into the collective field of view shown in FIG. 9.

Through the intelligent operation of the sensor array 910 and processing of the sensor information, the frequency of detection errors from an unstructured point cloud of the LiDAR sensors 912 may be reduced. The calculation and determination of a relative shape stability value for a detected object leverages the low error rate of the LiDAR sensors 912 to provide optimized object state classification between static and dynamic. Furthermore, the use of a relative shape stability value, and threshold, provides efficient and reliable object classification near the periphery of the field of view for the sensor array 910.

As a result of the improved efficiency and reliability of object classification as dynamic or static, the computing device 710 may provide more accurate evaluations and estimates of the orientation, movement direction, and movement velocity, which improves the automation of taxiing operations towards seamless adaptations to changes in a taxiing site. For instance, equipment, humans, or animals that present a safety hazard may be quickly assessed by the computing device 710 and translated into deviations from a predetermined taxiing route or speed. As another instance, accurate and efficient classification of an object by the computing device 710 may result in a determination that a minimal safety hazard exists and no deviation from a predetermined taxiing route or speed is necessary.

Further examples are set out below.

1. An object (222) classification system (700) comprising:

a vehicle (110);
a computing device (202, 710) connected to a sensor (150) mounted on the vehicle (110);
an object (222) positioned in a field of view of the sensor (150);
wherein the computing device (202, 710) determines a state of the object (222) in response to calculating a relative shape stability value for the object (222) over time; and
wherein the computing device (202, 710) deviates from a predetermined route (630, 640) for the vehicle (110) in response to a classification of the object (222) as a dynamic (128, 610) state.

2. The object (222) classification system (700) of example 1, wherein the sensor (150) is part of a sensor (150) array (910).

3. The object (222) classification system (700) of example 2, wherein the sensor (150) array (910) comprises a plurality of sensors (150, 650) each located on the vehicle (110).

4. The object (222) classification system (700) of example 3, wherein the plurality of sensors (150, 650) comprises at least two different types of sensors (150, 650).

5. The object (222) classification system (700) of example 4, wherein a first type of sensor (150) for the plurality of sensors (150, 650) is a LiDAR sensor (150).

6. The object (222) classification system (700) of example 5, wherein a second type of sensor (150) for the plurality of sensors (150, 650) is an optical sensor (150).

7. The object (222) classification system (700) of any of examples 1 to 6, wherein the computing device (202, 710) is positioned in the vehicle (110).

8. The object (222) classification system (700) of any of examples 1 to 7, wherein the predetermined route (630, 640) is between a runway (140) and a gate (120).

9. The object (222) classification system (700) of any of examples 1 to 8, wherein the object (222) is located proximal a periphery of the field of view of the sensor (150).

10. A method comprising:

detecting an object (222) with a sensor (150);
calculating a relative shape stability value for the object (222) over time;
determining a state of the object (222) in response to the relative shape stability value;
calculating the relative shape stability value by a computing device (202, 710); and
deviating from a predetermined route (630, 640) for a vehicle (110) in response to a classification of the object (222) as a dynamic (128, 610) state by the computing device (202, 710).

11. The method of example 10, wherein the relative shape stability value is calculated from a centroid velocity magnitude generated by the computing device (202, 710).

12. The method of example 10 or 11, wherein the relative shape stability value is calculated from a bounding box extent velocity magnitude computed by the computing device (202, 710).

13. The method of any of examples 10 to 2, wherein the state is classified as dynamic (128, 610) after the computing device (202, 710) evaluates a threshold crossing window for the object (222).

14. The method of any of examples 10 to 13, wherein the computing device (202, 710) conducts at least one statistical test on velocity components of the object (222) to classify the object (222) as dynamic (128, 610).

15. A method comprising:

detecting a first object (222) and a second object (222) with a sensor (150);
calculating a relative shape stability value for each of the first object (222) and second object (222) over time with a computing device (202, 710);
determining a first state of the first object (222) in response to the calculated relative shape stability value;
determining a second state of the second object (222) in response to the calculated relative shape stability value;
classifying each of the first object (222) and second object (222) as a dynamic (128, 610) state with the computing device (202, 710); and
deviating from a predetermined route (630, 640) for a vehicle (110) in response to a tracked dynamic (128, 610) state of first object (222) by the computing device (202, 710).

16. The method of example 15, wherein the first object (222) has a tracked dynamic (128, 610) state that differs from a tracked dynamic (128, 610) state of the second object (222).

17. The method of example 15 or 16, wherein the tracked dynamic (128, 610) state of the first object (222) is determined by the computing device (202, 710) to pose a safety risk to the vehicle (110).

18. The method of example 17, wherein the tracked dynamic (128, 610) state of the second object (222) is determined by the computing device (202, 710) to pose no safety risk to the vehicle (110).

19. The method of any of examples 15 to 18, wherein the computing device (202, 710) deviates a speed of the vehicle (110) in response to the tracked dynamic (128, 610) state of the first object (222).

20. The method of any of examples 15 to 19, wherein the computing device (202, 710) determines an orientation for the first object (222) in conjunction with the tracked dynamic (128, 610) state.

A1. An object classification system (700) comprising:

a vehicle (110), optionally an aircraft; and
a computing device (202, 710) connected to a sensor (150) mounted on the vehicle (110); and
wherein the computing device (202, 710) is configured to:

determine a state of an object (222) positioned in a field of view of the sensor (150) in response to calculating a relative shape stability value for the object (222) over time; and
cause the vehicle to deviate from a predetermined route (630, 640) in response to a classification of the object (222) as a dynamic (128, 610) state.

A2. The object classification system (700) of example A1, wherein the sensor (150) is part of a sensor array (910).

A3. The object classification system (700) of example A2, wherein the sensor array (910) comprises a plurality of sensors (150, 650) each located on the vehicle (110).

A4. The object classification system (700) of example A3, wherein the plurality of sensors (150, 650) comprises at least two different types of sensors (150, 650).

A5. The object classification system (700) of example A4, wherein a first type of sensor (150) for the plurality of sensors (150, 650) is a LiDAR sensor (150).

A6. The object classification system (700) of example A5, wherein a second type of sensor (150) for the plurality of sensors (150, 650) is an optical sensor (150).

A7. The object classification system (700) of any of examples A1 to A6, wherein the computing device (202, 710) is positioned in the vehicle (110).

A8. The object classification system (700) of any of examples A1 to A7, wherein the vehicle is an aircraft and the predetermined route (630, 640) is between a runway (140) and an airport gate (120).

A9. The object classification system (700) of any of examples A1 to A8, wherein the object (222) is located proximal a periphery of the field of view of the sensor (150).

A10. The object classification system (700) of any of examples A1 to A9, wherein the computing device (202, 710) is configured to generate a centroid velocity magnitude and to calculate the relative shape stability value from the centroid velocity magnitude.

A11. The object classification system (700) of any of examples A1 to A10, wherein the computing device (202, 710) is configured to compute a bounding box extent velocity magnitude and to calculate the relative shape stability value from the bounding box extent velocity magnitude.

A12. The object classification system (700) of any of examples A1 to A11, wherein the computing device (202, 710) is configured to classify the state as dynamic (128, 610) after evaluating a threshold crossing window for the object (222).

A13. The object classification system (700) of any of examples A1 to A12, wherein the computing device (202, 710) is configured to conduct at least one statistical test on velocity components of the object (222) to classify the object (222) as dynamic (128, 610).

A14. A method comprising:

detecting an object (222) with a sensor (150);
calculating a relative shape stability value for the object (222) over time;
determining a state of the object (222) in response to the relative shape stability value;
calculating the relative shape stability value by a computing device (202, 710); and
deviating from a predetermined route (630, 640) for a vehicle (110), optionally an aircraft, in response to a classification of the object (222) as a dynamic (128, 610) state by the computing device (202, 710).

A15. The method of example A14, wherein the relative shape stability value is calculated from a centroid velocity magnitude generated by the computing device (202, 710).

A16. The method of example A14 or A15, wherein the relative shape stability value is calculated from a bounding box extent velocity magnitude computed by the computing device (202, 710).

A17. The method of any of examples A14 to A16, wherein the state is classified as dynamic (128, 610) after the computing device (202, 710) evaluates a threshold crossing window for the object (222).

A18. The method of any of examples A14 to A17, wherein the computing device (202, 710) conducts at least one statistical test on velocity components of the object (222) to classify the object (222) as dynamic (128, 610).

A19. The method of any of examples A14 to A18, wherein the object (222) is a first object (222), and the method further comprises:

detecting a second object (222) with the sensor (150);

calculating a second relative shape stability value for the second object (222) over time with a computing device (202, 710);

determining a second state of the second object (222) in response to the calculated second relative shape stability value;

classifying each of the first object (222) and the second object (222) as a dynamic (128, 610) state with the computing device (202, 710).

A20. The method of example A19, wherein the first object (222) has a dynamic (128, 610) state that differs from a dynamic (128, 610) state of the second object (222).

A21. The method of example A19 or A20, wherein the dynamic (128, 610) state of the first object (222) is determined by the computing device (202, 710) to pose a safety risk to the vehicle (110).

A22. The method of example A21, wherein the dynamic (128, 610) state of the second object (222) is determined by the computing device (202, 710) to pose no safety risk to the vehicle (110).

A23. The method of any of claims A19 to A22, wherein a speed of the vehicle (110) deviates in response to the dynamic (128, 610) state of the first object (222).

A24. The method of any of claims A19 to A23, wherein the computing device (202, 710) determines an orientation for the first object (222) in conjunction with the tracked dynamic (128, 610) state.

A25. A computer program comprising computer program instructions that, when executed by a computer device (202, 710), cause the computer device (202, 710) to perform the method of any of examples A14 to A24.

A26. A computer-readable medium having stored thereon a computer program according to example A25.

A27. A computer device comprising memory having stored therein the computer program of example A25.

A28. A vehicle, optionally an aircraft, comprising a computer device according to example A27.

Additional examples include any one of the examples described above, where one or more of its components, functionalities or structures is interchanged with, replaced by or augmented by one or more of the components, functionalities or structures of a different example described above. It should be understood that various changes and modifications to the examples described herein will be apparent to those skilled in the art. Such changes and modifications can be made without departing from the scope of the claims and without diminishing its intended advantages. It is therefore intended that such changes and modifications be covered by the appended claims.

Although several examples of the disclosure have been disclosed in the foregoing specification, it is understood by those skilled in the art that many modifications and other examples of the disclosure will come to mind to which the disclosure pertains, having the benefit of the teaching presented in the foregoing description and associated drawings. It is thus understood that the disclosure is not limited to the specific examples disclosed herein above, and that many modifications and other examples are intended to be included within the scope of the appended claims. Moreover, although specific terms are employed herein, as well as in the claims which follow, they are used only in a generic and descriptive sense, and not for the purposes of limiting the present disclosure, nor the claims which follow.

**Claims**

1.  An object classification system (700) comprising:

    a vehicle (110); and
    a computing device (202, 710) connected to a sensor (150) mounted on the vehicle (110); and
    wherein the computing device (202, 710) is configured to:

    determine a state of an object (222) positioned in a field of view of the sensor (150) in response to calculating a relative shape stability value for the object (222) over time; and
    cause the vehicle to deviate from a predetermined route (630, 640) in response to a classification of the object (222) as a dynamic (128, 610) state.

2.  The object classification system (700) of claim 1, wherein the sensor (150) is part of a sensor array (910) that comprises a plurality of sensors (150, 650) each located on the vehicle (110) and, optionally, the plurality of sensors (150, 650) comprises at least two different types of sensors (150, 650).

3.  The object classification system (700) of claim 2, wherein a first type of sensor (150) for the plurality of sensors (150, 650) is a LiDAR sensor (150) and/or a second type of sensor (150) for the plurality of sensors (150, 650) is an optical sensor (150).

4. The object classification system (700) of any preceding claim, wherein the computing device (202, 710) is positioned in the vehicle (110) and/or wherein the object (222) is located proximal a periphery of the field of view of the sensor (150).

5. The object classification system (700) of any preceding claim, wherein the vehicle is an aircraft and the predetermined route (630, 640) is between a runway (140) and an airport gate (120).

6. The object classification system (700) of any preceding claim, wherein the computing device (202, 710) is configured to:

   generate a centroid velocity magnitude and to calculate the relative shape stability value from the centroid velocity magnitude; and/or
   compute a bounding box extent velocity magnitude and to calculate the relative shape stability value from the bounding box extent velocity magnitude.

7. The object classification system (700) of any preceding claim, wherein the computing device (202, 710) is configured to

   classify the state as dynamic (128, 610) after evaluating a threshold crossing window for the object (222); and/or
   conduct at least one statistical test on velocity components of the object (222) to classify the object (222) as dynamic (128, 610).

8. A method comprising:

   detecting an object (222) with a sensor (150);
   calculating a relative shape stability value for the object (222) over time;
   determining a state of the object (222) in response to the relative shape stability value;
   calculating the relative shape stability value by a computing device (202, 710); and
   deviating from a predetermined route (630, 640) for a vehicle (110) in response to a classification of the object (222) as a dynamic (128, 610) state by the computing device (202, 710).

9. The method of claim 8, wherein the relative shape stability value is calculated from:

   a centroid velocity magnitude generated by the computing device (202, 710); and/or
   a bounding box extent velocity magnitude computed by the computing device (202, 710).

10. The method of claim 8 or 9, wherein:

   the state is classified as dynamic (128, 610) after the computing device (202, 710) evaluates a threshold crossing window for the object (222); and/or
   the computing device (202, 710) conducts at least one statistical test on velocity components of the object (222) to classify the object (222) as dynamic (128, 610).

11. The method of any of claims 8 to 10, wherein the object (222) is a first object (222), and the method further comprises:

   detecting a second object (222) with the sensor (150);
   calculating a second relative shape stability value for the second object (222) over time with a computing device (202, 710);
   determining a second state of the second object (222) in response to the calculated second relative shape stability value;
   classifying each of the first object (222) and the second object (222) as a dynamic (128, 610) state with the computing device (202, 710).

12. The method of claim 11, wherein:

   the first object (222) has a dynamic (128, 610) state that differs from a dynamic (128, 610) state of the second object (222);
   the dynamic (128, 610) state of the first object (222) is determined by the computing device (202, 710) to pose a safety risk to the vehicle (110); and

the dynamic (128, 610) state of the second object (222) is determined by the computing device (202, 710) to pose no safety risk to the vehicle (110).

13. The method of any of claims 11 or 12, wherein:

a speed of the vehicle (110) deviates in response to the dynamic (128, 610) state of the first object (222); and/or the computing device (202, 710) determines an orientation for the first object (222) in conjunction with the dynamic (128, 610) state.

14. A computer program comprising computer program instructions that, when executed by a computer device (202, 710), cause the computer device (202, 710) to perform the method of any of claims 8 to 13, or a computer-readable medium having stored thereon such a computer program.

15. A computer device comprising memory having stored therein the computer program of claim 14, or a vehicle, optionally an aircraft, comprising such a computer device.

FIG. 1

FIG. 2

300 —

SENSING → PERCEPTION → DATA FUSION → TRACKING → PLANNING

310   320   330   340

PLANNING — 360 → TO FLIGHT DECK DISPLAY

350

370 → TO VEHICLE MANAGEMENT SYSTEM

FIG. 3

400 —

FUSION DETECTION REPORT → DETECTION TO TRACK ASSOCIATION → ASSOCIATION REPORT → TRACK UPDATE → STATE ESTIMATES → STATIC VS DYNAMIC CLASSIFICATION

410   420   430   440   450

470 → STATIC TRACK REPORT TO STATIC LOCAL PLANNER

460

480 → DYNAMIC TRACK REPORT TO DYNAMIC LOCAL PLANNER

FIG. 4

OBJECT POINT CLOUD CENTROID VELOCITY MAGNITUDE

502

VELOCITY THRESHOLD  510

500

OBJECT BOUNDING BOX EXTENT VELOCITY MAGNITUDE

504

RELATIVE STABILITY THRESHOLD  520

ALL PASS?  530  — YES → STATISTICAL TESTS ON VELOCITY COMPONENTS  540 → ANY PASS?  550 — YES

INCREMENT DYNAMIC COUNTER  560 → EVALUATE THRESHOLD CROSSING WINDOW  570 → CLASSIFY TRACK  580

FIG. 5

600 →

FIG. 6

700 →

| KNOWN OBJECT INFORMATION | | | CONTROLLER | 720 | | TAXIING STRATEGY |
|---|---|---|---|---|---|---|
| TAXIING ROUTES | | | MEMORY | 730 | | CLASSIFICATION STRATEGY |
| SENSOR INFORMATION | | | SENSOR CIRCUIT | 740 | | RSS |
| SITE INFORMATION | | | FUSION CIRCUIT | 750 | | OBJECT STATE |
| WEATHER INFORMATION | | | ALGORITHM CIRCUIT | 760 | | OBJECT ORIENTATION |
| GLOBAL POLICIES | | | CLASSIFICATION CIRCUIT | 770 | | OBJECT VELOCITY |
| | | | AUTOMATION CIRCUIT | 780 | | AUTOMATION STRATEGY |

710

FIG. 7

800

820

TIME

830 830

710

810

830

Time 0 Update

830 810 830

830 830

840

830

Time 1 Update

110

☆ Time 0 Object Centroid
★ Time 1 Object Centroid

FIG. 8

900

918

910

654 654

910

912 914 916

916 914

710

656

110

652 →

FIG. 9

Europäisches
Patentamt

European
Patent Office

Office européen
des brevets

# EUROPEAN SEARCH REPORT

**Application Number**

EP 25 18 7227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2022 220 403 A1 (GU DAHE) 21 September 2023 (2023-09-21) * paragraphs [0027] - [0101]; figures 1-8 * ----- | 1-15 | INV. G01S17/86 G01S17/933 G08G5/51 G08G5/80 |
| X | US 2022/300001 A1 (GAYAKA SHREEKANT [US] ET AL) 22 September 2022 (2022-09-22) * paragraphs [0021] - [0100]; figures 1-10 * ----- | 1-4,6-15 | |

**TECHNICAL FIELDS SEARCHED (IPC)**

G01S
G08G

The present search report has been drawn up for all claims

| Place of search | Date of completion of the search | Examiner |
|---|---|---|
| Munich | 3 December 2025 | Kern, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7227

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2025

| Patent document cited in search report | Publication date | Patent family member(s) | | Publication date |
|---|---|---|---|---|
| AU 2022220403 A1 | 21-09-2023 | AU | 2022220403 A1 | 21-09-2023 |
| | | EP | 4291491 A1 | 20-12-2023 |
| | | US | 2025131836 A1 | 24-04-2025 |
| | | WO | 2022170401 A1 | 18-08-2022 |
| US 2022300001 A1 | 22-09-2022 | CN | 116745580 A | 12-09-2023 |
| | | EP | 4309015 A1 | 24-01-2024 |
| | | US | 2022300001 A1 | 22-09-2022 |
| | | WO | 2022198161 A1 | 22-09-2022 |

EPO FORM P0459

For more details about this annex : see Official Journal of the European Patent Office, No. 12/82